(19) Europäisches Patentamt / European Patent Office / Office européen des brevets

(11) **EP 4 663 470 A1**

(12) **DEMANDE DE BREVET EUROPEEN**

(43) Date de publication:
**17.12.2025 Bulletin 2025/51**

(21) Numéro de dépôt: **25177516.9**

(22) Date de dépôt: **20.05.2025**

(51) Classification Internationale des Brevets (IPC):
**B60L 58/26** (2019.01)    **B60L 58/27** (2019.01)
**G01R 31/00** (2006.01)

(52) Classification Coopérative des Brevets (CPC):
**B60L 58/26; B60L 58/27;** B60L 2240/545;
B60L 2260/56

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **13.06.2024 FR 2406279**

(71) Demandeur: **AMPERE s.a.s.**
**92100 Boulougne-Billancourt (FR)**

(72) Inventeurs:
• **Charr, Nicolas**
  **78084 Guyancourt (FR)**
• **Mangin, Bruno**
  **78084 Guyancourt (FR)**

(74) Mandataire: **Renault Group**
**1, avenue du Golf**
**FR TCR AVA 4 4C**
**78084 Guyancourt Cedex (FR)**

(54) **MÉTHODE DE DÉTERMINATION D'UNE TEMPÉRATURE CIBLE DE PRÉCONDITIONNEMENT THERMIQUE D'UNE BATTERIE D'UN VÉHICULE AUTOMOBILE**

(57) L'invention concerne une méthode de détermination d'une température cible de préconditionnement thermique d'une batterie (40) d'un véhicule automobile (2) au moyen d'une unité de gestion thermique (30), préalablement à une opération de charge de ladite batterie au moyen d'une borne de recharge. La température cible de préconditionnement est déterminée en fonction (i) d'informations relatives à l'opération de charge (temps de charge de l'opération de charge, état de charge de la batterie au début de l'opération de charge, puissance de charge de la borne de recharge utilisée lors de l'opération de charge), et (ii) d'un gain d'énergie net positif non nul défini comme la valeur obtenue en retranchant une énergie d'ajustement (énergie nécessaire à l'unité de gestion thermique pour atteindre la température cible) à un gain d'énergie de charge (gain en énergie récupérée par la batterie opérée à la température cible par rapport à l'énergie récupérée à une température initiale).

## Fig.1

EP 4 663 470 A1

**Description**

La présente invention se rapporte à une méthode de détermination d'une température cible de préconditionnement thermique d'une batterie d'un véhicule automobile au moyen d'une unité de gestion thermique. L'invention se rapporte également à une méthode et un système de préconditionnement thermique d'une batterie d'un véhicule automobile utilisant la méthode de détermination selon l'invention.

Les performances de charge d'une batterie de véhicule automobile varient de manière significative avec la température et l'état de charge de la batterie. De manière générale, pour un état de charge donné, les performances de charge d'une batterie augmentent avec la température. Ces variations induisent un allongement du temps de charge et une irrégularité perçue par le client par rapport à la prestation charge. En conséquence, certains constructeurs implantent dans les véhicules un système de gestion thermique de la batterie permettant d'améliorer les performances de charge à froid et à chaud, au prix d'une consommation énergétique en roulage plus importante.

De plus, il existe des bornes de recharge de puissances différentes, par exemple présentant une puissance de 50kW ou de 130kW. D'autres puissances sont également disponibles selon les constructeurs de borne.

Or, tel que déjà mentionné, la puissance acceptable par une batterie lors de sa recharge varie en fonction de sa température et de son état de charge.

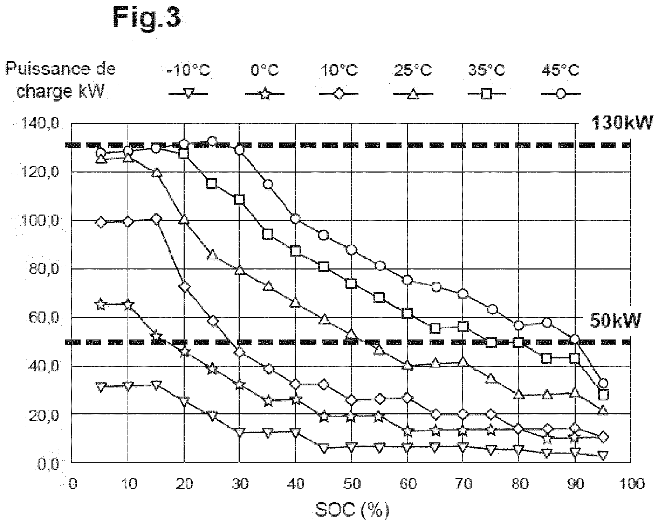

Ainsi, à titre d'exemple, la figure 3 est un graphe représentant les capacités de charge d'une batterie de 60 KWh pour différents états de charge et différentes températures de la batterie. Cette figure montre que, dans le cas d'une borne de recharge d'une puissance de 50kW, il n'est pas utile de chauffer la batterie présentant un état de charge initial de 30% à une température supérieure à 10 °C car la puissance de la borne ne permettrait pas d'augmenter la puissance de charge. Par contre, dans le cas d'une borne de recharge de 130kW, il est intéressant de chauffer à une température supérieure à 10°C. Selon l'état de charge initial de la batterie, il n'est par ailleurs pas forcément utile de chauffer la batterie le plus possible. Par exemple, sur la figure 3, pour un état de charge initial entre 10 et 20 %, on constate qu'il n'est pas utile de chauffer la batterie à une température supérieure à 35 °C.

Certaines stratégies de préconditionnement de batterie utilisent comme température cible une température permettant une puissance de charge maximale de la batterie. Toutefois, comme le montre la figure 3, cela conduit à une surconsommation de l'unité de gestion thermique lorsque la borne de recharge présente une puissance trop faible par rapport à cette puissance maximale.

En outre, lors des opérations de charge, le temps de charge est souvent inférieur à un temps de charge permettant de recharger complètement la batterie. Toutefois, la température de batterie permettant d'optimiser une charge va varier en fonction du temps de charge. Les stratégies optimisant la température de la batterie pour obtenir une recharge complète de cette dernière peuvent également conduire à une surconsommation de l'unité de gestion thermique lorsque la charge de la batterie n'est pas complète.

Ainsi, par exemple, le document JP2020013726A décrit une stratégie de gestion thermique qui définit une température cible de la batterie en début de charge. Cette température cible est définie en garantissant au client un gain net en puissance au moment de la charge, c'est-à -dire que la puissance dépensée pour amener la batterie à la température cible est inférieure au gain en puissance de charge issu de l'évolution de la température de la batterie. En fonction des caractéristiques de la batterie et du système de gestion thermique, plusieurs températures cibles peuvent répondre à ces critères mais le gain net en énergie chargée, et donc en autonomie, pour le client sera différent. Selon la stratégie décrite dans ce document, on détermine une température de début de charge qui minimise le temps de charge jusqu'à un taux de charge maximal de la batterie (recharge complète). Cette solution ne permet pas de maximiser le gain net client du fait que les recharges sur des bornes de recharge rapides ne permettent que très rarement d'atteindre un taux de charge maximal.

Il existe donc un besoin pour éviter une surconsommation d'une unité de gestion thermique lors du préconditionnement d'une batterie avant une opération de charge, notamment avant une opération de charge rapide.

L'invention vise à proposer une méthode de détermination d'une température cible de conditionnement qui permet d'optimiser l'énergie récupérée par la batterie lors d'une opération de charge et de maximiser le gain net en énergie pour un temps de charge donné, notamment pour un temps de charge court ne permettant pas une recharge complète de la batterie.

A cet effet, un premier objet de l'invention concerne une méthode de détermination d'une température cible de préconditionnement thermique d'une batterie d'un véhicule automobile au moyen d'une unité de gestion thermique, ce préconditionnement thermique étant préalable à une opération de charge de ladite batterie au moyen d'une borne de recharge. Cette méthode peut typiquement être mise en œuvre par un ordinateur. Cette température cible de préconditionnement correspond à une température de la batterie au début de l'opération de charge permettant d'optimiser l'énergie récupérée par la batterie lors de cette opération de charge et le gain net en énergie pour un temps de charge donné.

La méthode de détermination selon l'invention comprend :

- la réception d'informations relatives à une opération de charge de la batterie, notamment une opération de charge planifiée, lesdites informations comprenant un temps de charge de l'opération de charge, un état de charge de la batterie au début de l'opération de charge, une puissance de charge de la borne de recharge utilisée lors de l'opération de charge,

- la détermination de la température cible de préconditionnement en fonction (i) des informations reçues relatives à ladite opération de charge de la batterie et (ii) d'un gain d'énergie net positif non nul, ce gain d'énergie net étant défini comme la valeur obtenue en retranchant une énergie d'ajustement à un gain d'énergie de charge, ladite énergie d'ajustement étant définie comme l'énergie nécessaire à l'unité de gestion thermique pour que la batterie atteigne la température cible, et ledit gain d'énergie de charge étant défini comme le gain en énergie récupérée par la batterie opérée à la température cible par rapport à l'énergie récupérée lorsque la température de la batterie n'est pas à la température cible.

Une telle température cible permet ainsi d'optimiser l'énergie récupérée par la batterie pendant le temps de charge de l'opération de charge et pour un gain d'énergie net donné. Ce temps de charge peut notamment être fixé à une durée relativement courte, par exemple de 15 à 30 minutes, ne permettant pas une recharge complète de la batterie. Dit autrement, le temps de charge de l'opération de charge peut typiquement être déterminé pour que l'état de charge final de la batterie soit inférieur à 100%, par exemple de 60 à 90%.

La charge de la batterie à la température cible peut ainsi être optimisée pour ce temps de charge court. Dès lors, la durée d'un trajet nécessitant une ou plusieurs opérations de charge de la batterie peut être réduite de manière notable.

Par ailleurs, le fait d'utiliser un gain d'énergie net comme paramètre de sélection de la température cible permet d'assurer de manière certaine un gain lors de la charge par rapport aux méthodes basées sur un gain net en puissance.

Avantageusement, la température cible déterminée peut correspondre à une température pour laquelle le gain d'énergie net est maximal. La quantité d'énergie récupérée lors de la charge est alors maximale pour le temps de charge considéré, ce qui permet de réduire davantage la durée d'un trajet.

Avantageusement, le gain d'énergie de charge peut être un gain en énergie par rapport à une énergie récupérée par la batterie lorsque la température de la batterie n'est pas à la température cible et est à une température initiale prédéfinie. Cette température initiale prédéfinie peut être une température estimée de la batterie à l'arrivée à la borne de recharge de l'opération de charge ou être une température maximale de charge de la batterie. De préférence, cette température initiale prédéfinie peut être une température estimée à l'arrivée à la borne de recharge : le gain d'énergie net est alors déterminé de manière plus précise.

La méthode de détermination selon l'invention peut utiliser une base de données préalablement établie pour au moins un temps de charge et pour une pluralité de puissances de bornes de recharge utilisables pour une opération de charge. Une telle base de données, pour chaque temps de charge couplé à une puissance de charge d'une borne de recharge et à un état de charge de la batterie, associe une température de batterie à un gain d'énergie net. Il est alors aisé de déterminer une température cible qui correspond à la température de batterie pour laquelle le gain d'énergie net est positif non nul, et de préférence maximal.

Dans un mode de réalisation, la table de données peut être établie en fonction de conditions climatiques extérieures et/ou d'une température initiale de la batterie. Elle peut alors contenir des ensembles de données différents pour différents types de conditions climatiques, par exemple pour différentes températures extérieures et/ou différentes températures initiales de batterie. La détermination de la température cible de préconditionnement peut alors être réalisée en fonction d'une température extérieure et/ou de la température initiale de la batterie, typiquement une température réelle.

La méthode de détermination selon l'invention peut être mise en œuvre dans une unité de détermination configurée, notamment programmée, à cet effet. Typiquement, cette unité de détermination peut ici comprendre un ordinateur, ou plus généralement au moins un processeur ou tout autre type de calculateur numérique. L'unité de détermination peut aussi comprendre une pluralité de processeurs ou calculateurs numériques distincts, formant différents moyens de l'unité, coopérant les uns avec les autres. Le ou les processeurs peuvent comprendre des moyens de stockage qui peuvent être une mémoire vive (RAM), une mémoire morte programmable effaçable électriquement (EEPROM), une mémoire flash, une mémoire externe ou autre. Ces moyens de stockage peuvent, entre autres, stocker des données reçues, un modèle de contrôle et un ou plusieurs programmes informatiques.

L'invention a également pour objet une méthode de préconditionnement thermique d'une batterie d'un véhicule automobile préalable à une opération de charge de ladite batterie au moyen d'une borne de recharge, comprenant :

- une étape de détermination d'une température cible de préconditionnement mettant en œuvre le procédé selon l'invention,
- une étape d'ajustement de la température à la température cible au moyen d'une unité de gestion thermique de la batterie.

Lors de l'étape d'ajustement de la température, l'unité de gestion thermique de la batterie peut ainsi être commandée afin de chauffer/refroidir la batterie à la température cible de préconditionnement.

Avantageusement, l'étape d'ajustement peut comprendre :

- la détermination d'un temps de préconditionnement nécessaire à l'unité de gestion thermique pour que la batterie atteigne la température cible, notamment en fonction d'une température initiale de la batterie, de la température extérieure, et optionnellement d'une information de prédiction de la variation de la température de la batterie dans des conditions de roulage du véhicule,
- la réception d'une information relative à un temps restant avant l'opération de charge,
- la comparaison du temps de préconditionnement au temps restant avant l'opération de charge, et
- lorsque le temps de préconditionnement est inférieur ou égal au temps restant, ajuster la température de la batterie à la température cible au moyen de l'unité de gestion thermique,
- lorsque le temps de préconditionnement est supérieur au temps restant, estimer une température de batterie à la fin du temps restant et un gain d'énergie net ou un gain d'énergie de charge à ladite température estimée et ajuster la température de la batterie lorsque le gain d'énergie net ou le gain d'énergie de charge est supérieur à un seuil ; sinon ne pas ajuster la température de batterie.

Avantageusement, les étapes de détermination et d'ajustement peuvent être réitérées à intervalles de temps donné, par exemple toutes les 100ms, afin d'adapter la température cible de préconditionnement et le préconditionnement thermique de la batterie en temps réel.

L'invention a également pour objet un système de préconditionnement thermique d'une batterie d'un véhicule automobile équipée d'une unité de gestion thermique, ledit système comprenant :

- une unité de détermination d'une température cible de préconditionnement de la batterie préalable à une opération de charge de ladite batterie au moyen d'une borne de chargement,
- une unité d'ajustement de la température de la batterie à ladite température cible préalablement déterminée au moyen de ladite unité de gestion thermique.

Selon l'invention :

- l'unité de détermination est configurée pour mettre en œuvre l'étape de détermination d'une température cible de préconditionnement de la méthode de préconditionnement thermique de l'invention,
- l'unité d'ajustement est configurée pour mettre en œuvre l'étape d'ajustement de la méthode de préconditionnement thermique de l'invention.

L'unité de détermination peut notamment être configurée pour mettre en œuvre la méthode de détermination d'une température cible de préconditionnement selon l'invention. L'unité de détermination peut être tel que précédemment décrit.

L'unité d'ajustement peut ici comprendre un ordinateur, ou plus généralement au moins un processeur ou tout autre type de calculateur numérique. L'unité d'ajustement peut aussi comprendre une pluralité de processeurs ou calculateurs numériques distincts, formant différents moyens de l'unité, coopérant les uns avec les autres. Le ou les processeurs peuvent comprendre des moyens de stockage qui peuvent être une mémoire vive (RAM), une mémoire morte programmable effaçable électriquement (EEPROM), une mémoire flash, une mémoire externe ou autre. Ces moyens de stockage peuvent, entre autres, stocker des données reçues, un modèle de contrôle et un ou plusieurs programmes informatiques. L'unité d'ajustement peut notamment être configurée pour commander l'unité de gestion thermique et communiquer avec l'unité de détermination et l'unité de gestion thermique. A cet effet, chaque unité peut comprendre des moyens de communication avec les autres unités, par exemple des ports ou interfaces d'entrée/sortie ou tout moyen de communication avec ou sans fil existant.

Avantageusement, l'unité d'ajustement peut être configurée pour :

- déterminer un temps de préconditionnement nécessaire à l'unité de gestion thermique pour que la batterie atteigne la température cible, notamment en fonction d'une température initiale de la batterie, de la température extérieure, et optionnellement d'une information de prédiction de la variation de la température de la batterie dans des conditions de roulage du véhicule,
- recevoir une information relative à un temps restant avant l'opération de charge,
- comparer le temps de préconditionnement au temps restant avant l'opération de charge, et
- lorsque le temps de préconditionnement est inférieur ou égal au temps restant, ajuster la température de la batterie à la température cible au moyen de l'unité de gestion thermique, et

- lorsque le temps de préconditionnement est supérieur au temps restant, estimer une température de batterie à la fin du temps restant et estimer un gain d'énergie net ou un gain d'énergie de charge à ladite température estimée et ajuster la température de la batterie lorsque le gain d'énergie net ou le gain d'énergie de charge est supérieur à un seuil ; sinon ne pas ajuster la température de batterie.

Lorsque le temps de préconditionnement est inférieur au temps restant, l'unité d'ajustement peut également être configurée pour déterminer un temps de début de conditionnement tel que la température cible est atteinte par la batterie lorsque le temps restant est écoulé.

L'invention a également pour objet un système de navigation d'un véhicule automobile électrique ou hybride, ledit véhicule comprenant au moins un moteur électrique alimenté par au moins une batterie et une unité de gestion thermique de la batterie, ledit système de navigation comprenant :

- une unité de navigation configurée pour déterminer un itinéraire de déplacement dudit véhicule en fonction d'un état de charge initial du véhicule, et
- un système de préconditionnement thermique selon l'invention.

En particulier, l'unité de navigation peut en outre configurée pour :

- planifier au moins une opération de charge le long de l'itinéraire lorsque l'état de charge initial de la batterie est insuffisant pour réaliser l'itinéraire préalablement déterminé, et
- transmettre à l'unité de préconditionnement thermique, et notamment à son unité de détermination, les informations relatives à chaque opération de charge planifiée de la batterie, lesdites informations comprenant un temps de charge de l'opération de charge, un état de charge de la batterie au début de l'opération de charge, une puissance de charge de la borne de recharge utilisée lors de l'opération de charge.

Selon un autre objet, l'invention concerne un véhicule électrique ou hybride comprenant au moins un moteur électrique alimenté par au moins une batterie et une unité de gestion thermique de la batterie, caractérisé en ce qu'il comprend un système de navigation selon l'invention.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :

[Fig. 1] est une représentation schématique d'un système de navigation faisant partie d'un véhicule selon un mode de réalisation de l'invention.
[Fig. 2] est une représentation schématique des étapes mises en œuvre par les différentes unités d'un système de navigation selon un mode de réalisation de l'invention.
[Fig. 3] est un graphe représentant la puissance de charge d'une batterie en fonction de l'état de charge (SOC) de la batterie et de la température.

Des références identiques pourront être utilisées d'une figure à l'autre pour désigner des éléments identiques ou similaires.

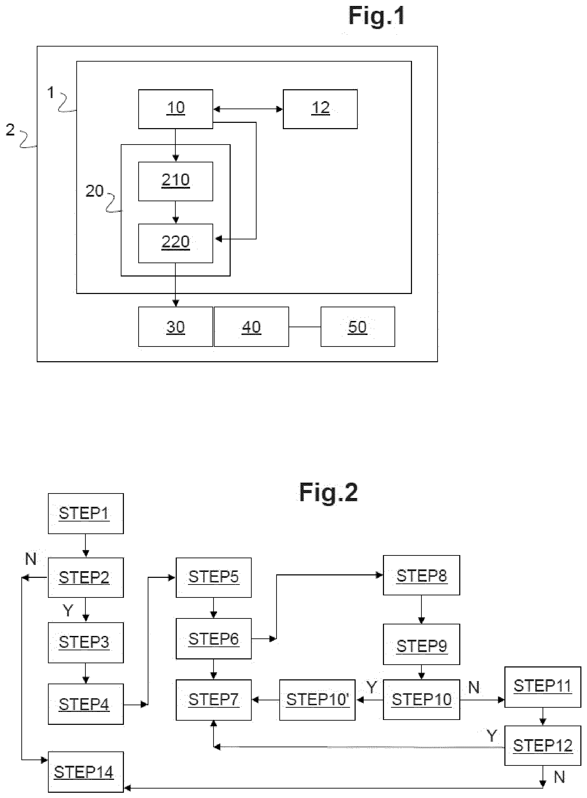

La figure 1 représente schématiquement un système de navigation 1 comprenant une unité de navigation 10 et un système de préconditionnement 20. Le système de préconditionnement 20 comprend une unité de détermination 210 d'une température cible de préconditionnement et une unité d'ajustement 220 de la température d'une batterie. Le système de navigation 1 permet de piloter une unité de gestion thermique 30 d'une batterie 40. Ce système de navigation 1 est intégré à un véhicule 2, typiquement un véhicule électrique ou hybride comprenant au moins un moteur électrique 50 alimenté par la batterie 40.

L'unité de gestion thermique 30 de la batterie comprend typiquement un système de chauffage de la batterie, par exemple à effet Joule, et un système de refroidissement de la batterie, utilisant par exemple un fluide de refroidissement (air, eau ou autre). Cette unité de gestion thermique 30 peut être une unité de chauffage, ventilation et climatisation, aussi désignée par l'acronyme HVAC.

Chacune des unités de navigation 10, de détermination 210 et d'ajustement 220 peut comprendre un ou plusieurs processeurs ou autres calculateurs numériques, une ou plusieurs mémoires et un ou plusieurs ports ou interfaces de communication entre elles et/ou avec un terminal d'affichage 12 et/ou avec l'unité de gestion thermique 30.

L'unité de navigation 10 du système de navigation 1, aussi appelée « Route Planner » ou « Electric Route Planner » est une unité configurée (programmée) pour déterminer un itinéraire de déplacement d'un véhicule en fonction d'un état de charge initial (SOCinit) de la batterie du véhicule. Une telle unité peut comprendre un ou plusieurs processeurs ou autres calculateurs numériques, une ou plusieurs mémoires et des moyens de communication avec l'unité d'ajustement et l'unité de détermination. Cette unité de navigation 10 peut en outre comprendre un composant multimédia (aussi appelé IVI pour InVehicule Infotainment) permettant d'accéder à des services de navigation. Cette unité de navigation 10 est typiquement reliée à un terminal d'affichage 12 (par exemple un écran) pour la représentation de données multimédia et notamment de données de navigation (cartes, etc...).

En général, l'unité de navigation 10 est configurée pour déterminer un itinéraire de déplacement en prenant en compte des informations externes telles que les conditions climatiques, l'encombrement des routes, etc. Il peut prendre en compte aussi des informations de voyages précédents relatives au style de conduite du conducteur, ou autre. L'unité de navigation 10 détermine en fonction de l'état de charge initial si une ou plusieurs opérations de recharge sont nécessaires lors de l'itinéraire et recherche les lieux où cette opération de recharge peut être effectuée. En général, ces lieux sont choisis de manière à minimiser le temps de trajet. L'unité de navigation peut également avoir accès au type de borne de recharge disponible pour chaque opération de recharge.

L'unité de navigation 10 peut ainsi configurée pour mettre en œuvre les étapes STEP1 à STEP4, tel que représenté schématiquement figure 2.

Lors d'une première étape STEP1, l'unité de navigation 10 détermine un itinéraire de déplacement dudit véhicule en fonction d'un état de charge initial du véhicule.

Puis, lors d'une deuxième étape STEP2, l'unité de navigation 10 détermine si l'état de charge initial est suffisant pour effectuer la totalité de l'itinéraire sans arrêt. Lors de cette étape, l'unité de navigation 10 peut par exemple déterminer la quantité d'énergie nécessaire à la réalisation de l'itinéraire, notamment en prenant en compte de manière usuelle des informations relatives aux conditions climatiques, à l'encombrement des routes, à un mode de conduite du conducteur, etc, puis comparer cette quantité d'énergie nécessaire à l'état de charge initial. Si l'unité de navigation 10 détermine que l'état de charge est insuffisant (Y), elle passe alors à l'étape STEP3, sinon (N), le processus passe à l'étape STEP14 et s'arrête.

Lors de l'étape STEP3, l'unité de navigation 10 planifie au moins une opération de charge à effectuer le long de l'itinéraire. Typiquement, la ou les opérations de charge sont planifiées de manière à minimiser la durée totale de l'itinéraire. Cette planification comprend une estimation de l'état de charge de la batterie préalablement à chaque opération de charge et la détermination d'un temps de charge.

Ensuite, lors de l'étape STEP4, l'unité de navigation 10 transmet à l'unité de détermination 210 des informations relatives à chaque opération de charge planifiée, ces informations comprenant le temps de charge de l'opération de charge planifiée, l'état de charge de la batterie au début de l'opération de charge planifiée, et la puissance de charge de la borne de recharge utilisée lors de l'opération de charge planifiée.

Ces informations relatives aux opérations de charge peuvent être reçues ou déterminées par l'unité de navigation 10. Typiquement, la puissance de charge de la borne de recharge utilisée lors de l'opération de charge est une information reçue alors que le temps de charge de l'opération de charge et l'état de charge de la batterie au début de l'opération de charge sont des informations déterminées, notamment estimées.

Ce temps de charge est typiquement inférieur à un temps de charge permettant une charge complète d'une batterie. Il peut typiquement être inférieur à 1 heure, par exemple de l'ordre de 15 à 30 minutes. En général, une unité de navigation 10 cherche en effet à minimiser le temps de trajet, et par conséquent à réduire le temps de charge.

L'étape STEP5 est ensuite mise en œuvre par l'unité de détermination 210. Au cours de cette étape, cette unité détermine la température cible de préconditionnement en fonction (i) des informations reçues relatives à ladite opération de charge planifiée et (ii) d'un gain d'énergie net positif non nul.

Ce gain d'énergie net GE_net est défini comme la valeur obtenue en retranchant une énergie d'ajustement E_ajust à un gain d'énergie de charge GE_charg :

[Maths 1]

$$GE\_net = GE\_charg - E\_ajust \quad (Eq.\ 1)$$

L'énergie d'ajustement E_ajust est définie comme l'énergie nécessaire à l'unité de gestion thermique 30 pour que la batterie 40 atteigne la température cible. Cette énergie varie donc en fonction de l'unité de gestion thermique 30 et de la batterie 40. Elle varie également en fonction de la température initiale de la batterie, laquelle peut être mesurée ou estimée.

Le gain d'énergie de charge GE_charg est défini comme le gain en énergie récupérée par la batterie opérée à la température cible par rapport à l'énergie récupérée lorsque la température de la batterie n'est pas à la température cible. Ce gain GE_charg peut ainsi s'exprimer selon l'équation 2 en fonction de l'énergie récupérée par la batterie opérée à la température cible E_Tcible et de l'énergie récupérée lorsque la température de la batterie n'est pas à la température cible, E_Tinit :

[Maths 2]

$$GE\_charg = E\_Tcible - E\_Tinit \quad (Eq.\ 2)$$

L'énergie récupérée lorsque la température de la batterie n'est pas à la température cible $E\_Tinit$, est une énergie récupérée lorsque la température de la batterie est à une température initiale qui peut être une température prédéfinie prise comme référence. Cette température initiale, prédéfinie, peut être une température estimée de la batterie à l'arrivée à la borne de recharge de l'opération de charge planifiée ou une température maximale de charge de la batterie.

On choisira de préférence comme température initiale une température estimée de la batterie à l'arrivée à la borne de recharge de l'opération de charge planifiée. Cette température peut avoir été préalablement estimée par l'unité de navigation 10, par exemple lors de l'étape STEP3, typiquement en fonction des conditions climatiques, des conditions de roulage, etc, puis transmise à l'unité de détermination 210 lors de l'étape STEP4.

De préférence, la température cible déterminée lors de cette étape STEP5 correspond à une température pour laquelle le gain d'énergie net GE_net est maximal.

Typiquement, l'étape STEP5 utilise une base de données préalablement établie pour au moins un temps de charge et pour une pluralité de puissances de bornes de recharge utilisables pour une opération de charge, et dans laquelle cette base de données, pour chaque temps de charge couplé à une puissance de charge d'une borne de recharge et à un état de charge de la batterie, associe une température de batterie à un gain d'énergie net GE_net.

La température initiale utilisée pour déterminer $E\_Tinit$ peut dépendre des conditions climatiques : on pourra alors établir des ensembles de données différents selon des conditions climatiques différentes, par exemple pour des conditions climatiques froides ou chaudes.

Les tableaux 1 et 2 présentent des exemples d'informations figurant dans cette base de données, préalablement déterminées pour une batterie de 60kWh, en prenant - 10°C comme température initiale utilisée pour déterminer l'énergie récupérée lorsque la température de la batterie n'est pas à la température cible (E_Tinit). Cette température initiale correspond ici à des conditions climatiques froides.

Le tableau 1 indique le Gain d'énergie net GE_net déterminé pour différentes températures de début de charge de la batterie pour un état de charge initial SOCini de la batterie de 15%, un temps de charge de 30 minutes et dans le cas d'une borne de recharge d'une puissance de charge Pcharge= 50kW et d'une borne de recharge de puissance de charge Pcharge =130 kW.

Le tableau 1 montre que pour une borne de recharge d'une puissance de 50kW, la température permettant de maximiser le gain d'énergie net, et correspondant à la température cible de préconditionnement que l'on cherche à déterminer, est 15 °C, alors que pour la borne de recharge d'une puissance de 130 kW, cette température est 35 °C.

Le tableau 2 indique le Gain d'énergie net GE_net déterminé pour différentes températures de début de charge de la batterie pour un état de charge initial SOCini de la batterie de 40%, un temps de charge de 30 minutes et dans le cas d'une borne de recharge d'une puissance de charge Pcharge= 50kW et d'une borne de recharge de puissance de charge Pcharge =130 kW. Les températures permettant de maximiser le gain d'énergie net, et correspondant aux températures cibles de préconditionnement que l'on cherche à déterminer, sont 35°C pour la borne de recharge de puissance 50 kW et 20 °C pour la borne de recharge de puissance 130 kW.

[Table 1]

| SOCini = 15% | Température début de charge | | | | |
|---|---|---|---|---|---|
| | -10°C (REF) | 5°C | 15°C | 20°C | 35°C |
| Pcharge = 50kW | 20,5 kWh | 21,45 kWh | **22,47 kWh** | 20,62 kWh | 16,26 kWh |
| Pcharge = 130kW | 20,5 kWh | 24,45 kWh | 26,27 kWh | 30,62 kWh | **34,26 kWh** |

[Table 2]

| SOC ini = 40% | Température début de charge | | | | |
|---|---|---|---|---|---|
| | -10°C (REF) | 5°C | 15°C | 20°C | 35°C |
| Pcharge = 50kW | 17 kWh | 16,45 kWh | 15,77 kWh | 17,62 kWh | **19,26 kWh** |
| Pcharge = 130kW | 17 kWh | 16,45 kWh | 15,77 kWh | **24,62 kWh** | 22,26 kWh |

La base de données peut être préalablement établie à partir de mesures réalisées lors de tests de roulage du véhicule et/ou à partir d'estimations, pour une unité de gestion thermique particulière et pour une batterie particulière.

Lorsque la base de données comprend des ensembles de données établis en fonction de conditions climatiques, l'unité de détermination 210 peut alors recevoir une information de température extérieure, provenant d'un capteur ou de l'unité de navigation 10, et déterminer ensuite la température cible à partir de l'ensemble de données correspondant à l'information de température extérieure.

La base de données peut aussi contenir plusieurs ensembles de données établis en fonction de la température initiale de la batterie, ce qui permet une détermination plus précise de l'énergie d'ajustement et par conséquent du gain net d'énergie. Dans ce cas, l'unité de détermination 210 peut alors recevoir une information de température initiale réelle de la batterie, provenant par exemple d'un capteur ou estimée, par exemple par l'unité de navigation, et déterminer ensuite la température cible à partir de l'ensemble de données correspondant à l'information de température initiale réelle.

De préférence, la base de données pourra comprendre des ensembles de données établis en fonctions des conditions climatiques et de la température initiale de la batterie.

A l'issue de l'étape STEP5, l'unité de détermination 210 a ainsi déterminé une température cible de préconditionnement de la batterie pour la prochaine opération de charge planifiée.

La température cible ainsi déterminée est ensuite transmise lors d'une étape STEP6 à l'unité d'ajustement 220 configurée pour commander l'unité de gestion thermique 30 de la batterie. Cette commande de l'unité de gestion thermique 30 peut être mise en œuvre à l'étape STEP7 pour ajuster la température de la batterie à la température cible.

Cette température cible de préconditionnement étant une température optimale de la batterie au début de la prochaine opération de charge planifiée, il est préférable que le préconditionnement de la batterie (à savoir son chauffage ou son refroidissement) de la température réelle de la batterie à la température cible soit mis en œuvre de sorte que la batterie atteigne la température cible à son arrivée à la borne de recharge. Ceci permet d'éviter de faire fonctionner l'unité de gestion thermique 30 plus longtemps que nécessaire.

A cet effet, l'unité d'ajustement peut être configurée pour optimiser la commande de l'unité de gestion thermique 30, par exemple en mettant en œuvre les étapes STEP8-STEP12 décrites ci-après, typiquement entre les étapes STEP6 et STEP7.

Lors d'une étape STEP8, l'unité d'ajustement 220 détermine un temps de préconditionnement Tp nécessaire à l'unité de gestion thermique 30 pour que la batterie 40 atteigne la température cible qui a été préalablement déterminée par l'unité de détermination 210.

A cet effet, l'unité d'ajustement 220 peut recevoir des informations comprenant la température initiale de la batterie, température réelle de la batterie mesurée ou estimée, la température extérieure, et optionnellement une information de prédiction de la variation de la température de la batterie dans des conditions de roulage du véhicule. Le temps de préconditionnement peut alors être déterminé en fonction de ces informations. En particulier, l'information de prédiction de la variation de la température de la batterie dans des conditions de roulage du véhicule permet de prendre en compte l'échauffement de la batterie lors du trajet du véhicule jusqu'à la borne de recharge pour une estimation plus précise du temps de préconditionnement. Cette information peut être reçue de l'unité de navigation 10.

Cette détermination du temps de préconditionnement peut être réalisée au moyen d'une base de données préalablement établie pour une unité de gestion thermique donnée, associant un temps de préconditionnement à une différence de température entre la température cible et la température initiale de la batterie, la température initiale de la batterie étant éventuellement corrigée par l'information de prédiction de variation de température. Le temps de préconditionnement peut également être estimé à partir d'un modèle thermique de l'unité de gestion thermique.

Avant ou après l'étape STEP8, l'unité d'ajustement 220 reçoit lors d'une étape STEP9 une information relative à un temps restant Tr avant l'opération de charge. Cette information est typiquement reçue de l'unité de navigation 10.

Puis, lors d'une étape STEP10, l'unité d'ajustement 220 compare le temps de préconditionnement au temps restant avant l'opération de charge planifiée.

Lorsque le temps de préconditionnement Tp est inférieur ou égal au temps restant Tr (Y), l'unité d'ajustement passe à l'étape STEP7 et commande l'unité de gestion thermique 30 pour ajuster la température de la batterie à la température cible. Sinon (N), l'unité d'ajustement 220 passe à l'étape STEP14 et arrête le processus (non représenté figure 2) ou bien peut passer à une étape STEP11 dans laquelle elle estime (i) une température de batterie à la fin du temps restant et (ii) un gain d'énergie net ou un gain d'énergie de charge à ladite température estimée. Lors d'une étape STEP12, l'unité d'ajustement compare alors le gain d'énergie net ou le gain d'énergie de charge estimé à une valeur seuil et passe à l'étape STEP7 pour ajuster la température de la batterie lorsque le gain d'énergie net ou le gain d'énergie de charge est supérieur à ce seuil (Y), sinon (N) le processus passe à l'étape STEP14 et s'arrête.

Optionnellement, lorsque le temps de préconditionnement Tp est inférieur ou égal au temps restant Tr (Y), l'unité d'ajustement peut passer de l'étape STEP10 à l'étape STEP10' avant de passer à l'étape STEP7. Au cours de cette étape optionnelle STEP10', elle détermine un temps de début de préconditionnement tel que la température cible est atteinte par la batterie lorsque le temps restant est écoulé. Elle passe alors à l'étape STEP7 pour ajuster la température de la batterie, l'unité de gestion thermique étant mise en route à ce temps de début de préconditionnement.

On pourra avantageusement prévoir de réitérer les étapes STEP1 à STEP7, y compris les étapes optionnelles STEP8-STEP12, à intervalles de temps régulier pour un contrôle en temps réel du préconditionnement de la batterie et une meilleure gestion de l'énergie.

On notera que le choix de la température cible en fonction du gain net en énergie est plus optimal que si un gain net en puissance est utilisé.

Par exemple, si l'on considère qu'il faut une puissance de 5kW pendant une heure pour préconditionner une batterie à une température donnée (soit une énergie consommée de 5kWh), qui permet un gain de puissance de 10 kW pour une charge de 15 minutes par rapport à une batterie non préconditionnée (soit un gain en énergie de 2,5 kWh).

Alors, le gain net en énergie est de -2,5 kWh (2,5 kWh -5 kWh), ce qui n'est pas favorable pour le client et signifie que la température considérée ne doit pas être prise en température cible, alors que le gain net en puissance est de 5kW (10 kW - 5 kW), ce qui peut laisser penser que la température est adaptée.

L'optimisation de la température cible en début de charge d'une opération de charge planifiée au moyen de la méthode de détermination selon l'invention permet ainsi de minimiser le temps de charge, de minimiser la surconsommation énergétique induite par l'unité de gestion thermique de la batterie et ainsi de réduire le temps global d'un trajet.

**Revendications**

1.  Méthode de détermination d'une température cible de préconditionnement thermique d'une batterie (40) d'un véhicule automobile au moyen d'une unité de gestion thermique, ce préconditionnement thermique étant préalable à une opération de charge de ladite batterie au moyen d'une borne de recharge,
    **caractérisée en ce qu'**elle comprend :

    - la réception d'informations relatives à une opération de charge de la batterie, lesdites informations comprenant un temps de charge de l'opération de charge, un état de charge de la batterie au début de l'opération de charge, une puissance de charge de la borne de recharge utilisée lors de l'opération de charge,
    - la détermination de la température cible de préconditionnement en fonction (i) des informations reçues relatives à ladite opération de charge de la batterie et (ii) d'un gain d'énergie net positif non nul, ce gain d'énergie net étant défini comme la valeur obtenue en retranchant une énergie d'ajustement à un gain d'énergie de charge, ladite énergie d'ajustement étant définie comme l'énergie nécessaire à l'unité de gestion thermique pour que la batterie atteigne la température cible, et ledit gain d'énergie de charge étant défini comme le gain en énergie récupérée par la batterie opérée à la température cible par rapport à l'énergie récupérée lorsque la température de la batterie n'est pas à la température cible.

2.  Méthode de détermination selon la revendication 1, **caractérisée en ce que** la température cible déterminée correspond à une température pour laquelle le gain d'énergie net est maximal.

3.  Méthode de détermination selon la revendication 1 ou 2, **caractérisée en ce que** le gain d'énergie de charge est un gain en énergie par rapport à une énergie récupérée par la batterie lorsque la température de la batterie n'est pas à la température cible et est à une température initiale prédéfinie, optionnellement choisie parmi une température estimée de la batterie à l'arrivée à la borne de recharge de l'opération de charge et une température maximale de charge de la batterie.

4.  Méthode de détermination selon l'une quelconque des revendications 1 à 3, **caractérisée en ce que** l'étape de détermination utilise une base de données préalablement établie pour au moins un temps de charge et pour une pluralité de puissances de bornes de recharge utilisables pour une opération de charge, et dans laquelle ladite base de données, pour chaque temps de charge couplé à une puissance de charge d'une borne de recharge et à un état de charge de la batterie, associe une température de batterie à un gain d'énergie net.

5.  Méthode de préconditionnement thermique d'une batterie d'un véhicule automobile préalable à une opération de charge de ladite batterie au moyen d'une borne de recharge, **caractérisée en ce qu'**elle comprend :

    - une étape de détermination d'une température cible de préconditionnement mettant en œuvre le procédé selon l'une quelconque des revendications 1 à 4,
    - une étape d'ajustement de la température à la température cible au moyen d'une unité de gestion thermique de la batterie.

6.  Méthode de préconditionnement thermique selon la revendication 5,
    **caractérisée en ce que** ladite étape d'ajustement comprend :

- la détermination d'un temps de préconditionnement nécessaire à l'unité de gestion thermique pour que la batterie atteigne la température cible,
- la réception d'une information relative à un temps restant avant l'opération de charge,
- la comparaison du temps de préconditionnement au temps restant avant l'opération de charge, et
- lorsque le temps de préconditionnement est inférieur ou égal au temps restant, ajuster la température de la batterie à la température cible au moyen de l'unité de gestion thermique,
- lorsque le temps de préconditionnement est supérieur au temps restant, estimer une température de batterie à la fin du temps restant et estimer un gain d'énergie net ou un gain d'énergie de charge à ladite température estimée et ajuster la température de la batterie lorsque le gain d'énergie net ou le gain d'énergie de charge est supérieur à un seuil ; sinon ne pas ajuster la température de batterie.

7. Méthode de préconditionnement thermique selon la revendication 5 ou 6, **caractérisée en ce que** l'on réitère à intervalles de temps donnés l'étape de détermination d'une température cible et l'étape d'ajustement.

8. Système de préconditionnement thermique (20) d'une batterie d'un véhicule automobile équipée d'une unité de gestion thermique, ledit système comprenant :

- une unité de détermination (210) d'une température cible de préconditionnement de la batterie préalable à une opération de charge de ladite batterie au moyen d'une borne de chargement,
- une unité d'ajustement (220) de la température de la batterie à ladite température cible préalablement déterminée au moyen de ladite unité de gestion thermique,
**caractérisé en ce que**
- l'unité de détermination est configurée pour mettre en œuvre l'étape de détermination d'une température cible de préconditionnement de la méthode de préconditionnement thermique de l'une quelconque des revendications 5 à 7,
- l'unité d'ajustement est configurée pour mettre en œuvre l'étape d'ajustement de la méthode de préconditionnement thermique de l'une quelconque des revendications 5 à 7.

9. Système de navigation (1) d'un véhicule automobile électrique ou hybride, ledit véhicule comprenant au moins un moteur électrique alimenté par au moins une batterie et une unité de gestion thermique de la batterie, ledit système de navigation comprenant :

- une unité de navigation (10) configurée pour déterminer un itinéraire de déplacement dudit véhicule en fonction d'un état de charge initial du véhicule,
**caractérisé en ce qu'**il comprend en outre un système de préconditionnement thermique (20) selon la revendication 8,
- l'unité de navigation (10) étant en outre configurée pour :

- planifier au moins une opération de charge le long de l'itinéraire lorsque l'état de charge initial de la batterie est insuffisant pour réaliser l'itinéraire préalablement déterminé, et
- transmettre à l'unité de préconditionnement thermique les informations relatives à chaque opération de charge planifiée de la batterie, lesdites informations comprenant un temps de charge de l'opération de charge, un état de charge de la batterie au début de l'opération de charge, une puissance de charge de la borne de recharge utilisée lors de l'opération de charge.

10. Véhicule électrique ou hybride (1) comprenant au moins un moteur électrique (50) alimenté par au moins une batterie (40) et une unité de gestion thermique (30) de la batterie, **caractérisé en ce qu'**il comprend un système de navigation (1) selon la revendication 9.

# Fig.1

# Fig.2

Fig.3

Europäisches
Patentamt

European
Patent Office

Office européen
des brevets

**RAPPORT DE RECHERCHE EUROPEENNE**

Numéro de la demande

EP 25 17 7516

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | JP 2020 013726 A (DENSO CORP) 23 janvier 2020 (2020-01-23) * alinéa [0035] - alinéa [0036] * * alinéa [0053] - alinéa [0054] * * alinéa [0058] - alinéa [0063] * * alinéa [0070] - alinéa [0071] * * colonne 45 - colonne 46 * * alinéa [0050] * ----- | 1-10 | INV. B60L58/26 B60L58/27 G01R31/00 |
| A | CN 116 061 756 A (GM GLOBAL TECH OPERATIONS LLC) 5 mai 2023 (2023-05-05) * alinéa [0064] - alinéa [0065] * ----- | 1-10 | |
| A | CN 102 725 182 A (CALSONIC KANSEI CORP) 10 octobre 2012 (2012-10-10) * alinéa [0050] - alinéa [0053] * ----- | 1-10 | |

| | DOMAINES TECHNIQUES RECHERCHES (IPC) |
|---|---|
| | B60L G01R |

Le présent rapport a été établi pour toutes les revendications

| Lieu de la recherche | Date d'achèvement de la recherche | Examinateur |
|---|---|---|
| La Haye | 5 novembre 2025 | Marín Saldaña, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................

& : membre de la même famille, document correspondant

EPO FORM 1503 03.82 (P04C02)

# EP 4 663 470 A1

## ANNEXE AU RAPPORT DE RECHERCHE EUROPEENNE
## RELATIF A LA DEMANDE DE BREVET EUROPEEN NO.

EP 25 17 7516

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-11-2025

| Document brevet cité au rapport de recherche | Date de publication | Membre(s) de la famille de brevet(s) | Date de publication |
|---|---|---|---|
| JP 2020013726 A | 23-01-2020 | AUCUN | |
| CN 116061756 A | 05-05-2023 | CN 116061756 A | 05-05-2023 |
| | | DE 102022122622 A1 | 04-05-2023 |
| | | US 2023137357 A1 | 04-05-2023 |
| CN 102725182 A | 10-10-2012 | CN 102725182 A | 10-10-2012 |
| | | EP 2529979 A1 | 05-12-2012 |
| | | JP 5517644 B2 | 11-06-2014 |
| | | JP 2011152840 A | 11-08-2011 |
| | | US 2012280050 A1 | 08-11-2012 |
| | | WO 2011093137 A1 | 04-08-2011 |

EPO FORM P0460

Pour tout renseignement concernant cette annexe : voir Journal Officiel de l'Office européen des brevets, No.12/82

**EP 4 663 470 A1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2020013726 A